# EUROPÄISCHE PATENTANMELDUNG

(11) **EP 3 611 056 A1**
(43) Veröffentlichungstag der Anmeldung: **19.02.2020**
(21) Anmeldenummer: 19184444.8
(22) Anmeldetag: 04.07.2019
(51) Int. Cl.: B60R 16/023, B60R 21/017, H01H 85/02

(54) **ELEKTRONISCHER LEISTUNGSVERTEILER**

(30) Priorität: 26.07.2018 DE 102018212507
(71) Anmelder: Robert Bosch GmbH, 70442 Stuttgart (DE)
(72) Erfinder: Schinzel, Mirko, 70378 Stuttgart (DE); Schill, Georg, 75175 Pforzheim (DE); Draese, Nils, 70469 Stuttgart (DE); Zabka, Matthias, 73079 Suessen (DE)

(57) **Zusammenfassung**

Die Erfindung betrifft einen elektronischen Leistungsverteiler für ein Energiebordnetz mit mindestens einem ersten Ausgang (16) für sicherheitskritische Verbraucher und mindestens einem zweiten Ausgang (18) für einen Zweig (20), in dem mindestens ein Verbraucher (22) angeordnet ist, einer elektronischen Sicherung (12), die in einem geschlossenen Zustand einen Stromfluss zu dem mindestens einen zweiten Ausgang (18) ermöglicht und in einem geöffneten Zustand diesen Stromfluss unterbricht, einem Bypass (30) zu der elektronischen Sicherung (12), der dazu eingerichtet ist, in einem Betriebszustand, in dem die elektronische Sicherung (12) geöffnet ist, den Stromfluss zu dem mindestens einen zweiten Ausgang (18) zu ermöglichen.

## Beschreibung

Die Erfindung betrifft einen elektronischen Leistungsverteiler für ein Energiebordnetz, ein solches Energiebordnetz und ein Verfahren zur Erhöhung der Zuverlässigkeit und Verfügbarkeit eines Energiebordnetzes.

### Stand der Technik

Unter einem Bordnetz ist im automotiven Einsatz die Gesamtheit aller elektrischen Komponenten in einem Kraftfahrzeug zu verstehen. Somit sind davon sowohl elektrische Verbraucher als auch Versorgungsquellen, wie bspw. Batterien, umfasst. Man unterscheidet grundsätzlich zwischen dem Energiebordnetz, das die Energieversorgung betrifft, und dem Kommunikationsbordnetz, das das BusSystem zur Kommunikation der Komponenten untereinander umfasst. Hierin wird insbesondere auf das Energiebordnetz eingegangen, das dafür zuständig ist, die Komponenten des Kraftfahrzeugs mit Energie zu versorgen.

Das Fahrzeugbordnetz hat die Aufgabe, die elektrischen Verbraucher mit Energie zu versorgen. Fällt die Energieversorgung aufgrund eines Fehlers bzw. Alterung im Bordnetz bzw. in einer Bordnetzkomponente in heutigen Fahrzeugen aus, so entfallen wichtige Funktionen wie die Lenkung, Bremse, Trajektorenplanung usw. Bereits kurzzeitige Verletzungen des normalen Betriebsspannungsbereichs können zu einer Beeinträchtigung der Sicherheit der Fahrzeuginsassen führen.

Zur Erhöhung der Verfügbarkeit wurden mehrkanalige Bordnetz-Strukturen vorgeschlagen. Diese werden benötigt, um Systeme für den hoch- oder vollautomatischen Fahrbetrieb fehlertolerant zu versorgen.

Zur Verteilung der elektrischen Energie werden sogenannte Leistungs-/Sicherungsverteiler eingesetzt, die neben der Verteilung der Energie auch der Sicherheit im Energiebordnetz dienen. Hierzu verfügen Leistungsverteiler über Sicherungen, die bei Strömen, die über einem Schwellwert liegen, sogenannte Überströme, die Verbindung unterbrechen. Hierzu können ansteuerbare elektronische Sicherungen aber auch Schmelzsicherungen, die bei Überströmen durchbrennen, eingesetzt werden. Bei Überströmen, die bspw. durch Kurzschlüsse verursacht werden können, können dann einzelne Verbraucher aber auch Verbrauchergruppen, die sich in einem Zweig des Energiebordnetzes befinden, von der Energieversorgung abgekoppelt werden.

In einem Energiebordnetz für sicherheitskritische Verbraucher, insbesondere in hochautomatisiert fahrenden und selbstfahrenden Fahrzeugen, aber nicht auf diese Anwendungen beschränkt, gelten besondere Ansprüche an die energetische Versorgungssicherheit, die Verfügbarkeit, die Diagnose und deren Qualitäten.

Im Fehlerfall, bspw. bei einem Kurzschluss, führt das Durchbrennen einer klassischen Schmelzsicherung zu einer Destabilisierung im Energiebordnetz, welches in temporären Ausfällen von sicherheitskritischen Verbrauchern mündet.

Elektronische Sicherungen sind ein geeignetes Mittel, um die Stabilität im Energiebordnetz zu garantieren. Diese elektronischen Sicherungen benötigen kein Schmelzintergral bzw. dieses kann flexibel bis zur Belastungsgrenze der Halbleiter nachgebildet werden. Aus kostentechnischen Gründen ist es jedoch nicht möglich, alle Endverbraucher in einem Fahrzeug mit elektronischen Sicherungen auszustatten.

Aufgrund dieser Einschränkung werden elektronische Sicherungen nur zu Absicherung von Hauptzweigen bzw. Untergruppen verwendet. Damit werden die Fehler auf diese Abzweige lokal eingegrenzt und es wird die Fehlerausbreitung auf das gesamte Bordnetz verhindert. In den Untergruppen übernehmen weiterhin klassische Schmelzsicherungen den Leitungsschutz.

Ein Nachteil bei dem bekannten Vorgehen besteht darin, dass ein Kurzschluss an einem Endverbraucher in diesem Hauptzweig die gesamte Untergruppe außer Funktion setzt, da die elektronische Absicherung dieses Hauptzweigs, entsprechend ihrer Aufgabe, schneller reagiert als die Schmelzsicherung an dem defekten Endverbraucherkreis. Erneutes Zuschalten des Hauptzweigs mit dem defekten Pfad wird durch den Kurzschlussstrom verhindert bzw. mündet in einen sogenannten Hiccup-Modus. Dies bedeutet, dass die elektronische Sicherung wiederholt, ggf. über einen langen Zeitraum, öffnet und schließt bis hin zur Zerstörung.

### Offenbarung der Erfindung

Vor diesem Hintergrund werden ein elektronischer Leistungsverteiler mit den Merkmalen des Anspruchs 1, ein Energiebordnetz gemäß Anspruch 8 und ein Verfahren nach Anspruch 9 vorgestellt. Ausführungsformen ergeben sich aus den abhängigen Ansprüchen und der Beschreibung.

Der beschriebene elektronische Leistungsverteiler, der auch als Sicherungsverteiler bezeichnet werden kann, dient dazu, Energie in einem Bordnetz zu verteilen und hierzu über Ausgänge in Ausgestaltung sowohl sicherheitskritische als auch nicht sicherheitskritische Verbraucher, sogenannte Komfortverbraucher, mit Energie zu versorgen. In dem elektronischen Leistungsverteiler können auch Sicherungen, elektronische Sicherungen und/oder Schmelzsicherungen vorgesehen sein, über die typischerweise sicherheitskritische Verbraucher abgesichert sind und mit Energie versorgt werden. Hierzu sind diese Verbraucher über erste Ausgänge des Leistungsverteilers angeschlossen. Sicherheitskritische Verbraucher sind bspw. die Bremsanlage, Trajektorenberechnung, die Beleuchtung und die Lenkung.

Zumindest eine elektronische Sicherung dient dazu, einen Zweig, in dem mindestens ein Verbraucher, typischerweise mindestens ein nicht sicherheitskritischer Verbraucher, vorgesehen ist. Zum Anschluss des Zweigs ist ein zweiter Ausgang des Leistungsverteilers vorgesehen. Sind mehrere Verbraucher in dem Zweig vorgesehen, so können diese in Gruppen aufgeteilt, d. h. gruppiert, sein. In diesem Zweig ist nunmehr mindestens eine Schmelzsicherung vorgesehen. Im Fehlerfall, bspw. bei einem Kurzschluss, kommt es nunmehr zu einem Überstrom. Dies führt dazu, dass die elektronische Sicherung in dem elektronischen Leistungsverteiler, an der dieser Zweig angeschlossen ist, öffnet, bevor die Schmelzsicherung durchgebrannt ist. Ein Schließen der elektronischen Sicherung, um ein Durchbrennen der Schmelzsicherung zu bewirken, verursacht nur wieder ein erneutes Öffnen der elektronischen Sicherung, bevor die Schmelzsicherung durchgebrannt ist.

Aus diesem Grund kann ein einzelnes Überstromereignis und damit ein Unterspannungsfehler dazu führen, dass das gesamte restliche Energiebordnetz nicht mehr zuschaltfähig ist.

Der vorgestellte elektronische Leistungsverteiler ermöglicht nunmehr, die Schmelzsicherung an dem defekten Zweig bzw. Endverbraucherkreis definiert und kontrolliert auszulösen bzw. durchzubrennen und damit die weitere Funktion der restlichen Verbraucher in diesem Zweig zu garantieren.

Um dies zu erreichen, ist ein Bypass vorgesehen, der parallel zu der elektronischen Sicherung angeordnet ist und diese somit überbrückt, sobald der Bypass aktiviert bzw. betätigt ist. Der Bypass ist somit dazu eingerichtet, in einem Betriebszustand, in dem die elektronische Sicherung geöffnet ist, den Stromfluss zu dem bzw. durch den mindestens einen zweiten Ausgang, an dem der betroffene Zweig hängt, zu ermöglichen, um auf diese Weise einen Durchbrennstrom, d. h. ein Fließen eines Durchbrennstroms in dem Zweig, zu bewirken.

Es wird somit ein besonderer elektronischer Leistungsverteiler vorgestellt. Dieser wird typischerweise durch eine Energiequelle, bspw. eine Batterie, einen Generator usw., versorgt. Mit diesem können mehrere sicherheitsrelevante Komponenten bzw. Verbraucher einzeln über die ersten Ausgänge versorgt werden. Diesen ersten Ausgängen ist in Ausgestaltung jeweils mindestens eine Sicherung zugeordnet. Diese können auch als elektronische Sicherungen, die somit schaltbar sind, ausgeführt sein. Diese ersten Ausgänge können einzeln überwacht und diagnostiziert werden.

Der mindestens eine Verbraucher in dem Zweig, der an dem zweiten Ausgang hängt, kann durch die elektronische Sicherung vom gesamten weiteren Energiebordnetz getrennt werden. Das restliche Energiebordnetz verzweigt sich weiter in Haupt- und Abzweige sowie weitere Untergruppen bzw. Sicherungskästen. Ein Trennen durch Öffnen der elektronischen Sicherung bewirkt ein Unterbrechen des Stromflusses zu bzw. in dem Zweig. Mit dem Bypass kann nunmehr erreicht werden, dass trotz geöffneter elektronischer Sicherung, ein Stromfluss, insbesondere ein dauerhafter Stromfluss, doch wieder ermöglicht wird, der dazu dient, einen Überstrom in dem Zweig zuzulassen, um ein Durchbrennen der zuständigen Schmelzsicherung zu bewirken. Dies wird typischerweise in einem sicheren Zustand durchgeführt. Sicherer Zustand bedeutet bspw., dass das Kraftfahrzeug, in dem sich das Bordnetz befindet, steht.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnung

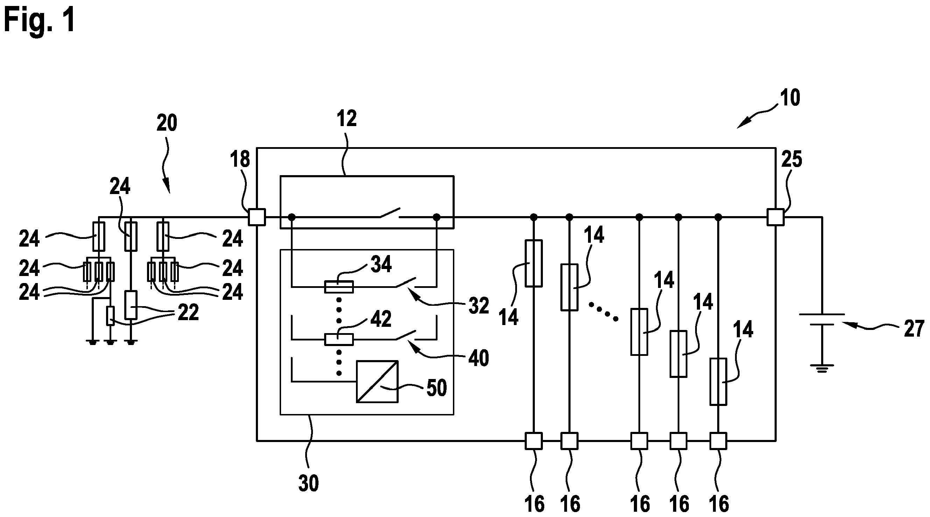

Figur 1 zeigt in einem Blockschaltbild eine Ausführung des vorgestellten elektronischen Leistungsverteilers.

### Ausführungsformen der Erfindung

Die Erfindung ist anhand einer Ausführungsform in der Zeichnung schematisch dargestellt und wird nachfolgend unter Bezugnahme auf die Zeichnung ausführlich beschrieben.

Die Darstellung zeigt einen elektronischen Leistungsverteiler, der insgesamt mit der Bezugsziffer 10 bezeichnet ist. Dieser Leistungsverteiler 10 weist eine elektronische Sicherung 12 und eine Anzahl von Schmelzsicherungen 14 auf, die jedoch ebenfalls, zumindest teilweise, als elektronische Sicherungen ausgeführt sein können. Die Schmelzsicherungen 14 sind jeweils ersten Ausgängen 16 zugeordnet, über die sicherheitskritische Verbraucher, die hier nicht dargestellt sind, versorgt werden.

Die elektronische Sicherung 12 ist an einen zweiten Ausgang 18 angeschlossen, über den ein Zweig 20 mit Energie versorgt wird. Dieser Zweig 20 umfasst Verbraucher 22, typischerweise Komfortverbraucher, und Schmelzsicherungen 24, die wie die Verbraucher 22 in Haupt- und Untergruppen aufgeteilt und damit gruppiert sind.

Weiterhin ist ein dritter Ein-/Ausgang 25 vorgesehen, über den eine Batterie 27 als Energiequelle angeschlossen ist.

Ein Fehlerfall in dem Zweig 20 führt zu einem Überstrom in diesem Zweig 22, was bewirkt, dass die elektronische Sicherung 12 öffnet bzw. geöffnet wird, bevor die zuständige Schmelzsicherung 24 in dem Zweig 20 durchgebrannt ist. Es wird nunmehr ein Konzept zum gezielten Durchbrennen der Schmelzsicherung 24 in dem Zweig 20 vorgestellt.

Hierzu wird ein Bypass 30 verwendet, der typischerweise in unkritischen Fahrsituationen, bestenfalls im Stand, gezielt ein Überstrom zulässt und damit den fehlerhaften Verbraucher oder ggf. auch eine Verbrauchergruppe in einem Unterzweig dauerhaft abtrennt.

Dieser Bypass kann auf unterschiedliche Weise ausgebildet sein. Es gibt vier mögliche Ausführungen, die auch miteinander kombiniert werden können und von denen drei in der Figur 1 dargestellt sind.

In einer ersten Ausführung umfasst der Bypass 30 einen Schalter 32, in diesem Fall ein sogenannter SafeBurn-Schalter, und eine Schmelzsicherung 34, die in Reihe zueinander geschaltet sind. Der SafeBurn-Schalter ist typischerweise als elektronisches Schaltelement ausgeführt und wird mittels einer Strommessung überwacht bzw. diagnostiziert. Das Vorgehen hierbei wird auch als hartes Durchbrennen bezeichnet:
- es erfolgt ein hartes Durchschalten mit dem zusätzlichem SafeBurn-Schalter 32, nicht mit der elektronischen Sicherung 12,
- der resultierende Durchbrennstrom wird nur durch die Widerstände der Leitungen, Kontakte und den Kurzschluss selbst begrenzt.

Zum Eigenschutz wird die Schmelzsicherung 34 in Reihe zu diesem Schalter 32 angeordnet. Diese Schmelzsicherung 34 hat zweckmäßigerweise einen höheren Wert als jede einzelne, dahinter angeordnete Schmelzsicherung 24.

In einer zweiten Ausführung umfasst der Bypass 30 einen SafeBurn-Schalter 40 und einen Vorwiderstand 42, die ebenfalls in Reihe geschaltet sind. Das Vorgehen hierbei wird auch als strömlimitiertes Durchbrennen bezeichnet. Dabei wird das Zuschalten über den Vorwiderstand 42 konstant oder variabel per PTC bzw. Kaltleiter oder ähnlichem durchgeführt.

Der resultierende Durchbrennstrom wird nun zusätzlich begrenzt. Hierbei besteht die Möglichkeit, diesen Strom an die Schmelzintegrale der angeschlossenen Schmelzsicherungen 24 anzupassen.

Ein weiterer zusätzlicher Nutzen ergibt sich aus dem kontrollierten, strombegrenzten Hochfahren der spannungsfreien Bordnetzzweige im Hochlauf des gesamten Bordnetzes.

Eine dritte Ausführung des Bypasses 30 sieht den Einsatz eines Gleichspannungswandlers 50 vor. Dann erfolgt das Durchbrennen über diesen Gleichspannungswandler 50. Dabei wird der Durchbrennstrom durch den typischerweise stromgeregelten Gleichspannungswandler 50 bereitgestellt.

Auch in dieser Ausführungsform ist das kontrollierte, strombegrenzte Hochfahren des spannungsfreien Bordnetzzweiges als zusätzlicher Nutzen anzusehen.

Eine vierte Ausführung sieht ein Durchbrennen mit einem Schwingkreis vor. Der Durchbrennstrom wird bei dieser Ausführung durch einen typischerweise stromgetriebenen Schwingkreis bereitgestellt.

## Patentansprüche

1. Elektronischer Leistungsverteiler für ein Energiebordnetz mit
- mindestens einem ersten Ausgang (16) für sicherheitskritische Verbraucher und mindestens einem zweiten Ausgang (18) für einen Zweig (20), in dem mindestens ein Verbraucher (22) angeordnet ist,
- einer elektronischen Sicherung (12), die in einem geschlossenen Zustand einen Stromfluss zu dem mindestens einen zweiten Ausgang (18) ermöglicht und in einem geöffneten Zustand diesen Stromfluss unterbricht,
- einem Bypass (30) zu der elektronischen Sicherung (12), der dazu eingerichtet ist, in einem Betriebszustand, in dem die elektronische Sicherung (12) geöffnet ist, den Stromfluss zu dem mindestens einen zweiten Ausgang (18) zu ermöglichen.

2. Elektronischer Leistungsverteiler nach Anspruch 1, bei dem in dem Bypass (30) ein Schalter (32) und eine Schmelzsicherung (34), die in Reihe zueinander geschaltet sind, vorgesehen sind.

3. Elektronischer Leistungsverteiler nach Anspruch 1 oder 2, bei dem in dem Bypass (30) ein Schalter (40) und ein Vorwiderstand (42), die in Reihe zueinander geschaltet sind, vorgesehen sind.

4. Elektronischer Leistungsverteiler nach einem der Ansprüche 1 bis 3, bei dem in dem Bypass (30) ein Gleichspannungswandler (50) vorgesehen ist.

5. Elektronischer Leistungsverteiler nach einem der Ansprüche 1 bis 4, bei dem in dem Bypass (30) ein Schwingkreis vorgesehen ist.

6. Elektronischer Leistungsverteiler nach einem der Ansprüche 1 bis 5, bei dem jedem ersten Ausgang (16) mindestens eine Sicherung zugeordnet ist.

7. Elektronischer Leistungsverteiler nach einem der Ansprüche 1 bis 6, bei dem in dem Zweig (20) eine Anzahl von Verbrauchern (22) vorgesehen ist, die in Gruppen angeordnet sind.

8. Energiebordnetz mit einem elektronischen Leistungsverteiler (10) nach einem der Ansprüche 1 bis 7.

9. Verfahren zur Erhöhung der Zuverlässigkeit und Verfügbarkeit eines Energiebordnetzes nach Anspruch 8, bei dem in einem Betriebszustand, in dem die elektronische Sicherung (12) geöffnet ist, der Bypass (30) aktiviert wird, so dass ein Durchbrennstrom in dem Zweig (20) ermöglicht wird.

10. Verfahren nach Anspruch 9, das in einem sicheren Zustand durchgeführt wird.
